# EUROPEAN PATENT APPLICATION

(11) **EP 2 682 611 A2**
(43) Date of publication of application: **08.01.2014**
(21) Application number: 13174327.0
(22) Date of filing: 28.06.2013
(51) Int. Cl.: F15B 19/00, G05B 23/02

(54) **Apparatus for commanding and controlling the functions of an actuator**

(30) Priority: 02.07.2012 IT PR20120042
(71) Applicant: DVG Automation S.P.A., 29016 Cortemaggiore (Piacenza) (IT)
(72) Inventor: Riboli, Giuseppe, 29016 Cortemaggiore (PC) (IT); Masini, Emanuele, 29016 Cortemaggiore (PC) (IT)
(74) Representative: Benelli, Cristian

(57) **Abstract**

The finding refers to the field of industrial automation, and in particular regards a stand-alone apparatus for commanding and controlling the functions of an actuator for industrial use.

The apparatus, enclosed in a single container (14), commands and controls the functions of an actuator (5), by means of an actuation and verification device (10), while a plurality of detection and evaluation members (8, 15a, 15b, 15c) obtain a plurality of parameters indicative of the functionality of the actuator (5) and the relative actuation system in order to verify the correct functioning thereof. The apparatus also comprises a command and control unit (2) connected to the actuation and verification device (10) as well as to the plurality of detection and evaluation members (15a, 15b, 15c) in order to coordinate the functioning thereof and to cyclically execute a self-diagnosis function.

## Description

The present finding refers to the industrial automation field, and in particular regards a stand-alone apparatus for commanding and controlling the functions of an actuator for industrial use.

An actuator is a mechanism through which something is automatically actuated, for example an industrial valve.

In the field of automation, it is statistically proven that most failures occur in the transducers, in the actuators and in the mechanical members. It is therefore of particular importance to arrange appropriate diagnostic functions for the purpose of reducing the failure search times.

Currently, the command and control of an actuator, for example electro-hydraulic though it could be of any other type such as electric, pneumatic etc., are obtained electromechanically by means of an electrical panel installed on the machine of which the actuator makes up part.

The electrical panel is arranged as a function of the characteristics of the actuator, as well as of the design needs of the machine in its entirety. Generally, the panel contains a series of terminal boards and relays and the control actions are assigned to a higher-level system.

The connection between the various actuators and the upper command system is obtained by means of the use of industrial buses, suitably arranged. Means for self-diagnosis on the functional state of the system are not provided in the panel.

Therefore, a control on other parameters are actuated, such as pressure or load losses, e.g. in the scope of a procedure which is known with the term of line-break. The line-break is based on the detection of the fall speed in a system, and based on the detected time a device is capable of establishing if there are breakages or losses in the tubes, automatically providing for the closure of the line.

In order to carry out this verification, along the line where the actuator is installed, it is necessary to separately install one or more instruments dedicated for such purpose. This means that in order to control multiple functions, the same number of devices is required.

In addition, if the design configuration requires it, or if instead the process in which the actuator is set to operate requires it, a further independent instrument is arranged, adapted to execute the so-called PST (Partial Stroke Testing). This test consists of a test on the actuator, executed in operative conditions of the process, in which, in order to verify the correct functionality of the actuator, an only partial movement is imposed thereto, such to not interfere with the process but sufficient for verifying the correct functioning of the actuator.

Also the possible arrangement of the P.I.D. function (Proportional-Integral-Derivative, i.e. a negative feedback system widely employed in control systems) requires the presence of dedicated instrumentation.

Hence, in consideration of the high number of technicians employed, the complexity of the apparatus thus obtained is evident; the apparatus is also dispersive and bulky, and it is above all impossible to carry out an overall verification on the functioning of the instruments used for detecting the controlled parameters. In brief, it is not possible to execute a self-diagnosis, given that each instruments acts on its own behalf and only responds to the upper level system.

Known in the art is the patent EP1117018, which deals with automatic control systems based on information technology and substantially regards a structured system for monitoring and controlling the engineering equipment in an installation, mainly a building comprising multiple floors. The system includes a central processing unit with an input-output device, as well as a plurality of control and/or monitoring and/or measurement sensors and devices for the units and apparatuses of the engineering equipment in an installation. The processing unit consists of a programmable computer server station having functions, according to the loaded software, which provide for the centralized reception of monitoring data through data channels inside a single network protocol, as well as for the processing of said data and the output of the control signals towards the control devices for said engineering equipment. This system further comprises controller devices connected in a "star" circuit to the input-output device of the central processing unit. Each control device bears a plurality of remote input-output modules serially connected thereto, while each of said modules bears a corresponding control device or sensor connected thereto.

The aforesaid technology provides for a dedicated and centralized physical space, i.e. a control room whose task is that of managing and communicating with different valves, commanding the opening thereof.

Therefore, the above-indicated patent is a control room; it is not equipment situated on the actuator and conceived only for commanding a single actuator. It is underlined that in the present description, the term actuator identifies a member capable of opening and closing a fluid interception valve, and more specifically in the petrochemical field.

The object of the present invention is that of proposing a stand-alone apparatus for commanding and controlling an actuator, which unites in a single instrument all the devices and instruments necessary for executing the control of the actuator and all the parameters deemed necessary, such as pressure, load losses, etc. The apparatus integrates at least one software / firmware code, with which it governs the actuator connected thereto.

The advantage of an apparatus of this type is to eliminate the dispersion due to the multiplicity of instruments and devices distributed in different positions and disconnected from each other, simplifying the overall configuration of the system, and above all allowing the actuation of a self-diagnosis on the components of the apparatus itself, thus ensuring the functionality thereof and the certainty in the control results.

Said object and advantage are all attained by the command and control apparatus of an actuator, object of the present finding, which is characterized by that provided in the below-reported claims.

These and other characteristics will be clearer from the following description of the finding, illustrated as a non-limiting example in the enclosed set of drawings.

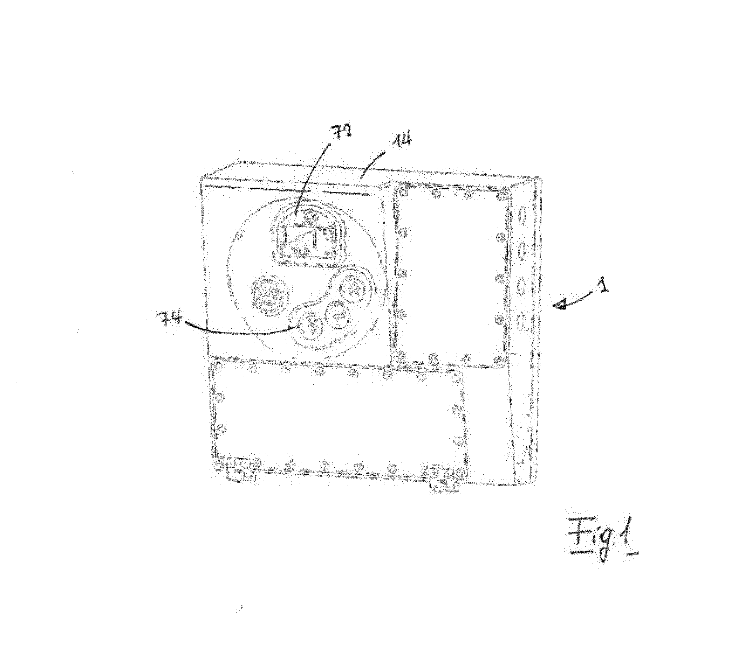

- Figure 1: illustrates a general view of the device;
- Figure 2: illustrates a possible block diagram of the device.

With particular reference to the figures, 1 generally indicates the apparatus for commanding and controlling the functions of an actuator 5, obtained in accordance with a preferred embodiment of the present invention.

The actuator in the illustrated embodiment is constituted by an actuator of double-acting hydraulic type, power supplied by means of a double line 6a, 6b coming from a suitable power supply device 7, comprising a pump and a hydraulic fluid tank. The pre-selected depiction must not however be intended as limiting, since the actuator could be of pneumatic type or even electric type, given that the power supply line is substituted in these cases with a pneumatic or electric line, respectively. Also the power supply device would in these cases be substituted with a compressed air source or with an electrical energy source, respectively.

Inside a single container 14, the apparatus 1 comprises an actuation and verification device 10, adapted to actuate the actuator 5 by means of a connection line 11 which leads to a solenoid valve 12 arranged along the double line 6a, 6b.

In the case of a pneumatic actuator, the control could likewise occur by means of a solenoid valve while in the case of an electric actuator the control could occur by means of relays or remote control switches, of electromechanical type or solid state such as TRIAC or the like. The latter device types were not illustrated in the figure since they are well known to the man skilled in the art.

The actuation and verification device 10 also has the task of verifying the functionality of the actuator, e.g. by means of PST test, described above, with the aid of detection and evaluation members 8, connected by means of a line 13 to a sensor 9 adapted to detect linear or angular movement values of the stem of the actuator 5.

The apparatus also comprises a plurality of further detection and evaluation members 15a, 15b, 15c, adapted to obtain a plurality of parameters indicative of the functionality of the actuator 5 and the relative actuation system.

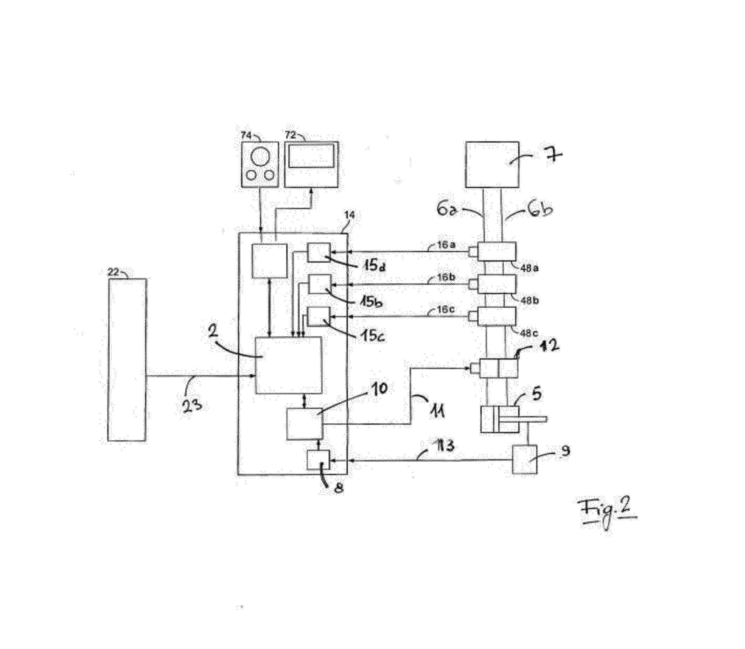

As is known in the field, the parameters to be detected, in the case of the hydraulic actuator, as illustrated in figure 2, comprise values of pressure and/or load losses and/or temperature of the line on which said actuator is inserted, or of any other point in proximity to the actuator which can in some way be indicative of the correctness of the functioning thereof.

Indeed, as occurs in known systems, the obtainment of such parameters has the function of verifying the correct functioning of the actuator 5 and of the same actuation system.

In detail, the detection and evaluation members 15a, 15b, 15c, are connected to a series of probes and/or sensors 48a, 48b, 48c, adapted to detect the aforesaid parameters in the most suitable points.

In the case of a pneumatic actuator, the parameters to be detected are not clearly different, while in the case of an electric actuator the detection and evaluation members 15a, 15b, 15c, are connected to probes and/or sensors 48a, 48b, 48c adapted to detect values of:
- pressure and/or load loss of the line on which said actuator is inserted,
- position and/or torque and/or temperature of said actuator.

It is clear that the parameters that must be measured change with the type of actuator employed and according to the requirements that arise each time in the single cases. The present description only contemplates several possible cases, as an example, but it is intended that the application of the invention be extended to all those cases in which it is required to evaluate parameters different from the single PST test. For this to be possible, probes and sensors will be arranged each time as required.

In accordance with the invention, the apparatus also comprises a command and control unit 2 connected to the actuation and verification device 10 as well as to the plurality of detection and evaluation members 15a, 15b, 15c.

In detail, each detection and evaluation member 8, 15a, 15b, 15c comprises a corresponding interface, not illustrated in the figures, adapted to allow the connection thereof with the command and control unit 2 in a suitable manner.

The fact that a command and control unit 2 is provided, and that with this the actuation and verification device 10 and the plurality of detection and evaluation members 8, 15a, 15b, 15c are all contained in a single container 14, hence no longer dispersed in various points of the system which employs the actuator, allows coordinating the functioning thereof in an optimal manner and cyclically executing a self-diagnosis function.

In order to complete the apparatus, a display device 72 and a keyboard 74 are provided, connected to the command and control unit 2, for displaying the status of the actuation and verification device 10, and of each of the plurality of detection and evaluation members 8, 15a, 15b, 15c, as well as for inputting actuation and control commands for the actuator.

The display device 72 is of graphical type and the navigation inside the menu is made simpler by the presence of suitably created icons. The keyboard 74 is provided with capacitive buttons, with the clear advantages that this involves.

Optionally, a remote control device 22 can be provided, connected to the apparatus by means of a line 23 or with wireless connection.

Finally, a photovoltaic panel can be provided for the power supply of the apparatus.

The apparatus in the configuration provided for the line-break analysis, or upon request also in other configurations, can be provided with a lithium ion rechargeable battery, capable of ensuring the effectiveness of the safety functions for a long period, even in the absence of electrical energy. Upon the return of network electrical power, a device will automatically provide for the recharging of the battery.

For such purpose, it should be stated that the components dedicated to safety are redundant, i.e. duplicated, in a manner so as to attain the parameter defined SIL3.

The apparatus tests, with a frequency configurable over time, the electrical continuity of all the connected coils, even if not energizing, in a manner so as to ensure efficiency and perfect functionality.

If a coil is found to be broken, an alarm signal will be emitted.

The apparatus is also capable of carrying out the data-logger function, i.e. storing in the incorporated memory the variations of one or more parameters (e.g. pressure, level, temperature, position, events and alarms), by means of detections carried out at suitably established time intervals, then allowing a graphical representation thereof.

The parameters, which are configurable, can be stored for over six months, by sampling the variables once a second. This allows the user to monitor the progression of the controlled variables and to set the suitable actions. All data can be downloaded on a PC and analyzed.

The connection with the PC can be obtained by means of Bluetooth or a standard field bus, or with any one other suitable connection type.

The progression of the stored variable can be brought up by means of local interface and the keyboard 74, and displayed on the graphical display 72 by setting the time period to be displayed. With the zoom function, it is possible to enlarge a part of the trace and appreciate the minimum variations thereof.

The possibility to have common field buses in the field of industrial automation also allows installing the apparatus on plants with extremely complex networks.

As appears evident to the man skilled in the art, the apparatus is capable of operating in stand-alone mode or to talk with the most common interface systems.

By equipping the apparatus with a GPRS module, it becomes possible to execute the status control thereof as well as control possible alarms by means of a PC provided with suitable application software, hence without being present onsite, with great advantage for the assistance service.

In a typical application, the apparatus is installed in an easily accessible position and is connected to the actuator, which can be installed in hard-to-reach positions, by means of cables of suitable length.

The most important feature that characterizes the apparatus of the present invention, however, is the high capacity for self-diagnosis and to store the events and possible alarms; all this is due to the compactness and unity of the means and devices composing the apparatus and due to the control of the unit 2 on the latter.

## Claims

1. Stand-alone apparatus for commanding and controlling the functions of an actuator (5), said apparatus mounted on board the actuator and comprising an actuation and verification device (10), adapted to actuate said actuator (5) and to verify the functionality thereof, a plurality of detection and evaluation members (8, 15a, 15b, 15c), adapted to obtain a plurality of parameters indicative of the functionality of the actuator (5) and the relative actuation system in order to verify the correct functioning thereof, **characterized in that** it also comprises a command and control unit (2) connected to said actuation and verification device (10) as well as to the plurality of detection and evaluation members (15a, 15b, 15c) in order to coordinate the functioning thereof and to cyclically execute a self-diagnosis function.

2. Apparatus according to claim 1, **characterized in that** said actuator (5) is of hydraulic or pneumatic type and that said plurality of detection and evaluation members (15a, 15b, 15c) are connected to a series of probes and/or sensors (48a, 48b, 48c) adapted to detect the values of:
a. pressure and/or load loss of the line on which said actuator is inserted,
b. position and/or torque and/or temperature of said actuator.

3. Apparatus according to claim 1 o 2, **characterized in that** said actuator (5) is of electric type and that said plurality of detection and evaluation members (15a, 15b, 15c) are connected to probes and/or sensors (48a, 48b, 48c) adapted to detect values of voltage and/or current and/or temperature and/or torque and/or position.

4. Apparatus according to one or more of the claims 1 to 3, **characterized in that** detection and evaluation members (8) connected to said actuation and verification device (10) are connected to members (9) adapted to detect linear or angular movement values.

5. Apparatus according to one or more of the claims 1 to 4, **characterized in that** each detection and evaluation member of said plurality of detection and evaluation members (8, 15a, 15b, 15c) comprises a corresponding interface adapted to allow the connection thereof with said command and control unit (2).

6. Apparatus according to one or more of the claims 1 to 5, **characterized in that** a display device (72) and a keyboard (74) are provided, connected to said command and control unit (2), for displaying the status of each of said actuation and verification device (10), and plurality of detection and evaluation members (8, 15a, 15b, 15c), as well as for inserting actuation and control commands.

7. Apparatus according to claim 6, **characterized in that** a remote control device (22) is provided.

8. Apparatus according to one or more of the claims 1 to 7, **characterized in that** the power supply is supplied thereto by means of a photovoltaic panel.

9. Apparatus according to one or more of the claims 1 to 7, **characterized in that** the components dedicated to safety are redundant in the system.
